# EUROPEAN PATENT SPECIFICATION

(11) **EP 1 572 367 B1**
(45) Date of publication and mention of the grant of the patent: **08.04.2009**
(21) Application number: 03799481.1
(22) Date of filing: 15.12.2003
(51) Int. Cl.: B02C 19/06, B02C 13/00, B02C 23/18, B02C 23/08, B01J 2/00

(54) **PROCESS FOR COATING A FINELY MILLED SOLID**
VERFAHREN ZUM BESCHICHTEN EINES FEIN GEMAHLENEN FESTSTOFFES
PROCEDE POUR L'ENDUCTION D'UN SOLIDE FINEMENT BROYE

(30) Priority: 13.12.2002 CH 21282002
(43) Date of publication of application: 14.09.2005
(60) Divisional application: 08021942.1
(73) Proprietor: Syngenta Participations AG, 4058 Basel (CH)
(72) Inventor: HAUK, Gerhard, CH-4333 Muenchwilen (CH)
(74) Representative: Osborn, Martin Keith
(86) International application number: PCT/EP2003/014244
(87) International publication number: WO 2004/054718

(56) References cited:
- EP-A- 0 179 943
- EP-A- 0 347 329
- GB-A- 1 253 067
- US-A- 3 491 953

## Description

The present invention relates to a process for the application of liquids to finely milled solids such a process is known for example from EP-A-0,179,943.

The processing of finely milled solids charged with liquid is widespread in many branches of industry, for example in the industrial manufacture and processing of foodstuffs, fine chemicals, pharmaceuticals or crop protection products. The application of the liquid is intended to provide the finely milled solid with particular properties which are advantageous for the intended use.

It is known to apply liquids to finely milled solids as follows: the solid is first finely milled, and the liquid that is to be applied is then applied to the solid in a mixing device in the form of a fine spray, followed by intensive mixing of the mixture thus obtained.

Using that process it is not possible to achieve a homogeneous distribution of the liquid on the solid, because lumps form during the mixing of the liquid with the finely milled solid, especially when viscous liquids are being used. The resulting mixture must therefore undergo at least one further milling process. The known process for the application of liquids to milled solids accordingly comprises the following individual steps:
- milling of the solid;
- application of the liquid by spraying, and mixing of the milled solid with the liquid; and
- further milling and/or homogenisation of the resulting mixture, one or more further milling operations being necessary, depending on the type of liquid applied.

Not only is this process laborious, but in most cases, especially when the liquid to be applied is viscous, a homogeneous distribution of the liquid on the particles of the solid is not achieved, despite the subsequent additional milling operation.

The object of the present invention is to provide a process for the application of a liquid to a finely milled solid, which process avoids the disadvantages of the prior art process and, in a simple manner, permits the production of finely milled solids whose particles are homogeneously charged with a liquid.

According to the present invention it is proposed to achieve that object as per claim 1.

The process according to the invention can in principle be carried out using any conventional fine milling apparatus if such an apparatus is provided with a device which enables the liquid that is to be applied to the finely milled solid to be introduced into the milling zone during the milling operation or simultaneously with the introduction of the material for milling. Especially suitable are mills, in which the material for milling is moved by a gas stream flowing through the milling zone, and which are provided with a device with which the finely divided liquid is introduced into the milling zone simultaneously with the introduction of the material for milling. Especially suitable mills are, for example, gas-jet mills or fluidised-bed counter-jet mills, in which the solid moved by the milling gas stream flowing at very high speed is comminuted in the milling zone by the action of the impact of the particles of the solid. When that type of mill is used, the excess pressure of the milling gas introduced into the milling zone is in the range of from 5 bar to 10 bar; especially from 6 bar to 7 bar. The excess pressure of the liquid introduced into a gas stream flowing through the milling zone or directly into the milling zone is likewise in the range of from 5 bar to 10 bar, especially from 6 bar to 7 bar, but the excess pressure of the liquid is in each case from 0.25 bar to 1 bar above the pressure of the milling gas.

The process according to the invention is preferably carried out at ambient temperature. The temperature may, however, also be up to 50°C, especially up to 30°C, below or above the ambient temperature, depending, for example, on the nature of the finely milled solid, on the pressure or on the temperature of the finely milled solid or of the liquid.

Gas-jet mills and fluidised-bed counter-jet mills are especially suitable for carrying out the process according to the invention because, apart from the particles of the solid moved by the milling gas, they comprise no mechanically moved parts. As a result, mechanical ignition sources are avoided, which constitutes a considerable advantage when processing combustible mixtures.

Further suitable fine milling apparatuses are mechanical mills, such as impact mills or hammer mills, in which the material for milling is moved through the mill by means of a carrier gas and/or a mechanical feed device, such as a star wheel or a feed screw. In an impact mill, the solid is comminuted against the impact surfaces arranged in the milling zone. In a hammer mill, the solid is comminuted by rotating hammers, and gas is preferably used as the carrier medium for the material for milling. The pressure of the carrier gas is generally in the region of the ambient pressure. Depending on the type of milling apparatus, the pressure may also be up to 0.3 bar below or above the ambient pressure. The liquid is sprayed into the milling apparatus with a pressure that is above the pressure prevailing in the mill. Binary nozzles are especially suitable for spraying in the liquid. When a binary nozzle is used, the pressure is preferably in the range of from 3 bar to 4 bar.

The process according to the invention is preferably also carried out at ambient temperature when a mechanical mill is used. However, the temperature may also be up to 50°C, especially up to 30°C, below or above the ambient temperature, depending, for example, on the nature of the finely milled solid, on the pressure or on the temperature of the finely milled solid or of the liquid.

As solids there come into consideration according to the invention all solid organic or inorganic substances in pure form or in the form of mixtures of different solids. The process according to the invention is especially advantageous in the case of mixtures of solids, such as solid ready-for-use formulations of pharmaceutical or agrochemical active ingredients or solid preparations of foodstuffs. For example, solid ready-formulated crop protection products, such as solid acaricides, fungicides, growth regulators, herbicides, insecticides or nematocides, can be charged with a liquid in order to improve their in-use properties, for example to achieve a better wetting of the plant or an improvement in the biological activity of the product or to facilitate the preparation of a spray broth by an improved distribution behaviour of the product in water. The particle size (diameter) of the solids or solid mixtures introduced into the mill as the material for fine milling is generally in the range of from 40 µm to 200 µm, preferably from 80 µm to 120 µm. After the completion of the fine milling operation, the particle size (diameter) of the finely milled solid is generally in the range of from 1 µm to 10 µm, preferably from 2 µm to 4 µm.

The amount of the liquid to be applied is in the range of from 0.001 % by weight to 20 % by weight, especially from 0.01 % by weight to 10 % by weight, preferably from 0.5 % by weight to 5 % by weight, based on the amount of the solid.

When the process according to the invention is carried out in mills in which the material for milling is moved by a milling gas stream or by a carrier gas stream, air is generally used as the milling or carrier gas. When processing explosive or readily oxidisable materials, however, it is also possible to use an inert gas, especially nitrogen.

As liquids that can be applied by means of the process according to the invention to finely milled solids there come into consideration, for example, liquid active ingredients, solutions of active ingredients, surface-active substances, such as non-ionic, anionic or cationic surfactants or detergents, flavourings and attractants, it being possible for surface-active substances, flavourings and attractants to be used, according to their physical properties, in the form of the substances *per se* or in the form of solutions.

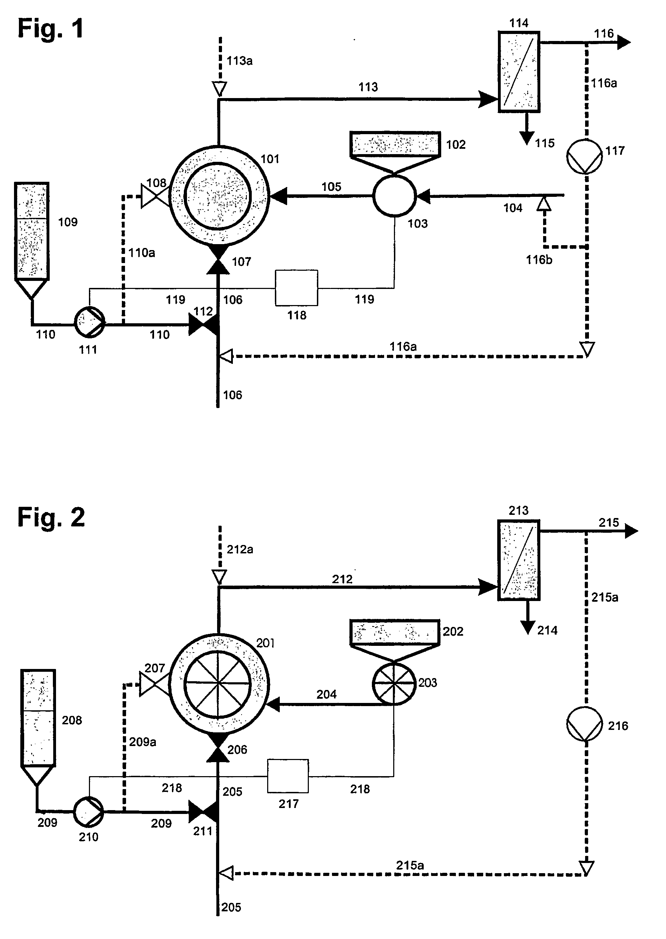

Examples of suitable devices for carrying out the process according to the invention are shown in the Figures 1 (Fig. 1) and 2 (Fig. 2).

Figure 1 shows, in diagrammatic form, a gas-jet or fluidised-bed counter-jet mill which is provided with a device for introducing a liquid. The continuous lines show the standard device. Several of the possible alternative embodiments are shown by broken lines.

Figure 2 shows, in diagrammatic form, a mechanical mill which is provided according to the invention with a device for introducing a liquid. In Figure 2 also, the continuous lines show the standard device, while several of the possible alternative embodiments are shown by broken lines.

The process according to the invention is explained hereinbelow with reference to the devices shown in the Figures 1 and 2.

### Figure 1

The material for milling is introduced into the gas-jet mill **101** from the storage container **102** *via* the feed device **103** and the pipe **105.** The material for milling is fed into the gas-jet mill by means of a milling gas stream which is supplied through the pipe **104.** At the same time, the liquid that is to be applied to the finely milled solid is introduced, from the storage container **109** *via* the pipe **110** and the metering pump **111,** into the carrier gas supplied through the pipe **106.** The liquid is either supplied *via* the nozzle **112,** or is supplied directly (not shown in Figure 1), to the carrier gas stream flowing at very high speed. The carrier gas/liquid mixture thus formed is introduced into the gas-jet mill **101** *via* the pipe **106** and the nozzle **107.** The introduction of the carrier gas/liquid mixture into the gas-jet mill **101** can also take place using several nozzles simultaneously. The ratio of solid to liquid is controlled by means of the regulating unit **118,** which is connected to the metering pump **111** and the feed device **103** by the control lines **119.** The product/gas mixture leaving the gas-jet mill **101** is supplied *via* the pipe **113** to the separating device **114,** from which the product separated from the gas is removed *via* the pipe **115.** The gas separated from the product is discharged *via* the pipe **116.** If desired, additional carrier gas can be supplied *via* the pipe **113a** to the pipe **113** containing the product/gas mixture, in order to support the carriage of the product/gas mixture to the separating device **114.** Instead of being introduced *via* the pipe **110** (not shown in Figure 1) or the nozzle **112** into the carrier gas supplied through the pipe **106,** the liquid can also be introduced directly into the gas-jet mill **101** *via* the pipe **110a** and the liquid nozzle **108** but this does not form part of the present invention. Furthermore, it is possible, that the gas separated from the product is not discharged from the device *via* the pipe **116** but is returned *via* the pipe **116a** and the compressor **117** into the pipe **106** for the carrier gas. This procedure is advisable especially when a gas other than air, e. g. nitrogen, is used. A portion of the gas returned through the pipe **116a** can also be introduced *via* the pipe **116b** into the pipe **104** and used as milling gas. The supply of fresh gas, which is necessary owing to losses of gas, can be effected *via* the pipe **104** and/or the pipe **106.**

### Figure 2

The material for milling is introduced into the mechanical mill **201** from the storage container **202** *via* the feed device **203,** for example a star wheel or a feed screw, and the pipe **204.** At the same time, the liquid that is to be applied to the finely milled solid is introduced, from the storage container **208** *via* the pipe **209,** the metering pump **210** and the nozzle **211,** into the carrier gas supplied through the pipe **205.** The carrier gas/liquid mixture thus formed is introduced into the mechanical mill **201** *via* the pipe **205** and the nozzle **206.** The introduction of the carrier gas/liquid mixture into the mechanical mill **201** can also take place using several nozzles simultaneously. The ratio of solid to liquid is controlled by the regulating unit **217,** which is connected to the feed device **203** and the metering pump **210** by the control lines **218.** The product/gas mixture leaving the mechanical mill **201** is supplied *via* the pipe **212** to the separating device **213,** from which the product separated from the gas is removed *via* the pipe **214.** The gas separated from the product is discharged *via* the pipe **215.** If desired, additional carrier gas can be supplied *via* the pipe **212a** to the pipe **212** containing the product/gas mixture, in order to support the carriage of the product/gas mixture to the separating device **213.** Instead of being introduced *via* the nozzle **211** into the carrier gas supplied through the pipe **205,** the liquid can also be introduced directly into the mechanical mill **201** *via* the pipe **209a** and the liquid nozzle **207** but this does not form part of the present invention. Furthermore, it is possible, that the gas separated from the product is not discharged from the device *via* the pipe **215** but is returned *via* the pipe **215a** and the compressor 216 into the pipe **205** for the carrier gas. This procedure is advisable especially when a gas other than air, e. g. nitrogen, is used. The supply of fresh gas, which is necessary owing to losses of gas, can be effected *via* the pipe **205.**

The process according to the invention for the production of finely milled solids charged with a liquid has, for example, the following advantages over the known process:
- The process according to the invention constitutes a substantial simplification, because it enables the solid to be finely milled and the finely milled solid to be charged with a liquid in a single operation, while at least three operations are required with the known process.
- The process according to the invention permits a homogeneous distribution of the liquid on the particles of the finely milled solid and accordingly a substantially better product quality.
- It is possible using the process according to the invention for even very small amounts of highly viscous liquids to be applied homogeneously to the particles of the finely milled solid in a simple manner, which with the known process is possible only with a considerable outlay or is not possible at all.
- The process according to the invention, especially when carried out in gas-jet mills or fluidised-bed counter-jet mills, offers an increased safety in the processing of combustible solids or mixtures of solids, because in gas-jet mills or fluidised-bed counter-jet mills, in contrast to the mixers used in accordance with the prior art, there are no mechanically moved machine parts which can act as sources of ignition.

The following Examples explain the present invention in greater detail. Neither these Examples nor the Examples shown in the Figures 1 and 2 constitute a limitation of the present invention.

### Examples

Example 1: A water dispersible powder for slurry seed treatment (WS formulation), which comprises as active ingredient the insecticidal compound thiamethoxam in an amount of 70 % by weight, is prepared. The solid raw material, consisting of the insecticidally active ingredient and customary auxiliaries and adjuvants, which has a mean particle size (diameter) of about 100 µm, is fed into a gas-jet mill according to Figure 1. Air is used as the milling gas and the carrier gas. A highly viscous polyoxyethylene-polyoxypropylene copolymer liquid, heated to 50°C, having a dynamic viscosity of >4000 mPas, is added to the carrier gas stream in an amount of 4.5 % by weight, based on the amount of the solid raw material fed in. The excess pressure is 6 bar in the milling gas stream and 6.5 bar in the carrier gas/liquid stream. In the resulting product, which exhibits improved handling properties, 50 % of the milled particles have a particle size (diameter) of less than 3.7 µm and 90 % of the milled particles have a particle size (diameter) of less than 11.1 µm, the liquid being homogeneously distributed on the particles of the finely milled solid.

The product thus obtainable exhibits a homogeneous distribution of the liquid on the particles of the finely milled solid, which cannot be obtained using the process of the prior art.

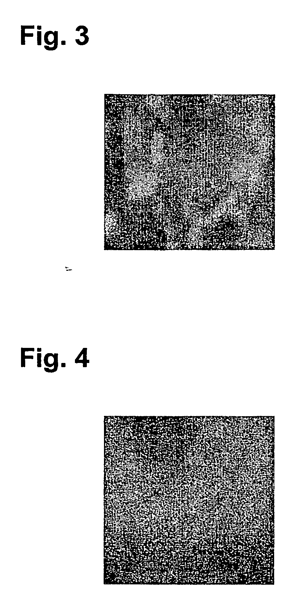

This difference in the homogeneities of the products is shown in the Figures 3 and 4, Figure 3 illustrating the product quality achievable by the prior art process, i. e. by finely milling the solid, adding to the finely milled solid the liquid to be applied, mixing, further milling and mixing again, and Figure 4 illustrating the homogeneity achievable by the process according to the invention.

Not only exhibits the product thus obtainable a substantially better quality, but the process for its preparation also constitutes, compared with the known process, a substantial simplification. At the same time, the risk of a powder explosion is markedly reduced, because according to the exemplified process there are no mechanically moved machine parts, which could come into contact with the product and act as sources of ignition.

Example 2: In a manner analogous to that described in Example 1 the product obtainable according to the process of Example 1 can also be prepared using an inert milling gas, such as nitrogen or argon.

## Claims

1. A process for applying a liquid to a solid that is to be finely milled in which the liquid to be applied to said solid is either introduced separately into the milling zone of a fine milling device during the milling operation or introduced simultaneously with said solid that is to be finely milled, where the liquid is passed through a first nozzle into a carrier gas and the resultant carrier gas/liquid mixture enters the milling zone via a second nozzle such that the liquid becomes a finely divided liquid and the fine milling is carried out in the presence of the finely divided liquid; and where the ratio of the solid to the liquid is controlled by means of a regulating unit.

2. A process according to claim 1, in which there is used a fine milling device in which the solid that is to be finely milled is moved by a milling gas stream flowing through the milling zone.

3. A process according to either claim 1 or claim 2, in which the fine milling device is a gas-jet or fluidised-bed counter-jet mill.

4. A process according to either claim 1 or claim 2, in which the fine milling device is an impact mill.

5. A process according to either claim 1 or claim 2, in which the fine milling device is a hammer mill.

6. A process according to any one of claims 1 to 5, in which the solid that is to be finely milled is a ready-formulated active ingredient mixture.

7. A process according to any one of claims 1 to 6, in which the solid that is to be finely milled is a ready-formulated pesticide or a crop protection product.

8. A process according to any one of claims 1 to 7, in which the particle size of the solid that is to be finely milled is in the range of from 40µm to 200µm.

9. A process according to any one of claims 1 to 8, in which the particle size of the solid that is to be finely milled is in the range of from 80µm to 120µm.

10. A process according to any one of claims 1 to 9, in which the liquid is a liquid active ingredient, the solution of an active ingredient, a surface-active substance, a flavouring or an attractant.

11. A process according to any one of claims 1 to 10, in which the amount of liquid to be applied is in the range of from 0.001 to 20% by weight, based on the solid that is to be finely milled.

12. A process according to any one of claims 1 to 11 where the solid is thiamethoxam.

## Patentansprüche

1. Verfahren zum Aufbringen einer Flüssigkeit auf einen fein zu mahlenden Feststoff, bei dem die auf den Feststoff aufzubringende Flüssigkeit entweder getrennt während des Mahlvorgangs oder gleichzeitig mit dem fein zu mahlenden Feststoff in den Mahlbereich einer Feinmahleinrichtung eingebracht wird, wobei die Flüssigkeit durch eine erste Düse in ein Trägergas geführt wird und die resultierende Trägergas/Flüssigkeits-Mischung über eine zweite Düse in den Mahlbereich eintritt, so dass die Flüssigkeit zu einer fein verteilten Flüssigkeit wird und das Feinmahlen unter Vorhandensein der fein verteilten Flüssigkeit durchgeführt wird; und wobei das Verhältnis des Feststoffs zu der Flüssigkeit durch eine Reguliereinrichtung gesteuert wird.

2. Verfahren nach Anspruch 1, bei dem eine Feinmahleinrichtung verwendet wird, in welcher der fein zu mahlende Feststoff durch einen durch den Mahlbereich fließenden Mahlgasstrom bewegt wird.

3. Verfahren nach Anspruch 1 oder 2, bei dem die Feinmahleinrichtung eine Gasstrahl- oder Fließbett-Gegenstrahlmühle ist.

4. Verfahren nach Anspruch 1 oder 2, bei dem die Feinmahleinrichtung eine Prallmühle ist.

5. Verfahren nach Anspruch 1 oder 2, bei dem die Feinmahleinrichtung eine Hammermühle ist.

6. Verfahren nach einem der Ansprüche 1 bis 5, bei dem der fein zu mahlende Feststoff eine fertig zubereitete Wirkstoffmischung ist.

7. Verfahren nach einem der Ansprüche 1 bis 6, bei dem der fein zu mahlende Feststoff ein fertig zubereitetes Pestizid oder ein Pflanzenschutzmittel ist.

8. Verfahren nach einem der Ansprüche 1 bis 7, bei dem die Partikelgröße des fein zu mahlenden Feststoffs in dem Bereich von 40 µm bis 200 µm liegt.

9. Verfahren nach einem der Ansprüche 1 bis 8, bei dem die Partikelgröße des fein zu mahlenden Feststoffs in dem Bereich von 80 µm bis 120 µm liegt.

10. Verfahren nach einem der Ansprüche 1 bis 9, bei dem die Flüssigkeit ein flüssiger Wirkstoff, die Lösung eines Wirkstoffs, eine Oberflächen-aktive Substanz, ein Aromastoff oder ein Lockstoff ist.

11. Verfahren nach einem der Ansprüche 1 bis 10, bei dem die Menge der aufzubringenden Flüssigkeit in dem Bereich von 0,001 bis 20 Gew.-% basierend auf dem fein zu mahlenden Feststoff liegt.

12. Verfahren nach einem der Ansprüche 1 bis 11, bei dem der Feststoff Thiamethoxam ist.

## Revendications

1. Procédé d'application d'un liquide sur un solide qui doit être broyé finement, dans lequel le liquide à appliquer sur ledit solide est introduit séparément dans la zone de broyage d'un dispositif de broyage fin au cours de l'opération de broyage, ou est introduit simultanément avec ledit solide qui doit être broyé finement, dans lequel le liquide passe à travers une première buse dans un gaz porteur et le mélange résultant de gaz porteur/liquide pénètre dans la zone de broyage par l'intermédiaire d'une seconde buse de telle sorte que le liquide devienne un liquide finement divisé et que le broyage fin se fasse en présence des liquides finement divisés ; et dans lequel le rapport du solide sur le liquide est contrôlé au moyen d'une unité de régulation.

2. Procédé selon la revendication 1, dans lequel il est utilisé un dispositif de broyage fin dans lequel le solide qui doit être finement broyé est déplacé par un flux de gaz de broyage qui traverse la zone de broyage.

3. Procédé selon la revendication 1 ou la revendication 2, dans lequel le dispositif de broyage fin est un broyeur à jet de gaz ou un broyeur à contre jet à lit fluidisé.

4. Procédé selon la revendication 1 ou la revendication 2, dans lequel le dispositif de broyage fin est un broyeur à impact.

5. Procédé selon la revendication 1 ou la revendication 2, dans lequel le dispositif de broyage fin est un broyeur à marteau.

6. Procédé selon l'une quelconque des revendications 1 à 5, dans lequel le solide qui doit être finement broyé est un mélange de substances actives déjà formulé.

7. Procédé selon l'une quelconque des revendications 1 à 6, dans lequel le solide qui doit être finement broyé est un produit de protection des cultures ou un pesticide déjà formulé.

8. Procédé selon l'une quelconque des revendications 1 à 7, dans lequel la taille des particules du solide qui doit être finement broyé se situe dans la plage comprise entre 40 µm et 200 µm.

9. Procédé selon l'une quelconque des revendications 1 à 8, dans lequel la taille des particules du solide qui doit être finement broyé se situe dans la plage comprise entre 80 µm et 120 µm.

10. Procédé selon l'une quelconque des revendications 1 à 9, dans lequel le liquide est une substance active liquide, la solution d'une substance active, une substance surfactante, un aromatisant ou un attractif.

11. Procédé selon l'une quelconque des revendications 1 à 10, dans lequel la quantité de liquide à appliquer se situe dans la plage comprise entre 0,001 % et 20 % en poids, sur la base du solide qui doit être finement broyé.

12. Procédé selon l'une quelconque des revendications 1 à 11 dans lequel le solide est du thiaméthoxame.
